Europäisches Patentamt

European Patent Office

Office européen des brevets

(11) Veröffentlichungsnummer: **0 286 834**
**A2**

## EUROPÄISCHE PATENTANMELDUNG

(21) Anmeldenummer: **88103772.5**

(22) Anmeldetag: **10.03.88**

(51) Int. Cl.⁴ **G01N 25/00**

(30) Priorität: **16.03.87 CH 1058/87**

(43) Veröffentlichungstag der Anmeldung:
**19.10.88 Patentblatt 88/42**

(84) Benannte Vertragsstaaten:
**DE FR GB IT**

(71) Anmelder: **Novasina AG**
**Talstrasse 35-37**
**CH-8808 Pfäffikon(CH)**

(72) Erfinder: **Petr, Horn**
**Im Haslenzopf 90**
**CH-8833 Samstagern(CH)**

(74) Vertreter: **Blum, Rudolf Emil Ernst et al**
**c/o E. Blum & Co Patentanwälte Vorderberg 11**
**CH-8044 Zürich(CH)**

(54) Taupunkttemperatur-Messelement und Verfahren zur Taupunkt-temperaturmessung.

(57) In einem Kühlblock (2) ist ein wärmeleitender Träger (6) mit Elektroden (5) angeordnet. Die Elektroden (5) bilden einen Temperatursensor, eine Heizungselektrode und Elektroden zur Messung der Leitfähigkeit. Die Elektroden (5) sind durch eine elektrisch isolierende Schicht 7) abgedeckt, wobei die Schicht über die Länge L eine betaubare Oberfläche begrenzt. Der Kühlblock (2) ist mit einer Wärmeisolation (4) umhüllt und seine Temperatur wird durch einen zweiten Temperatursensor (8) gemessen. Die Querschnittfläche des Wärmetransports (proportional zu D) vom Kühlblock (2) zu der betaubaren Oberfläche (proportional zu L) ist wesentlich kleiner als die betaubare Oberfläche selber. Dadurch ist es möglich, dass die Temperatur an der betaubaren Oberfläche bei der Kondensatbildung im wesentlichen durch die Temperatur des Kondensats an der betaubaren Oberfläche bestimmt wird, und dass ein Plateau bei der Taupunkttemperatur bei zunehmender Kondensatbildung feststellbar ist.

FIG. 2

## Taupunkttemperatur-Messelement und Verfahren zur Taupunkttemperaturmessung

Die Erfindung betrifft ein Taupunkttemperatur-Messelement mit einem Sensor zur Temperaturmessung einer betaubaren Oberfläche, einem zur Kühlung der betaubaren Oberfläche vorgesehenen Kühlblock und mindestens einem für den Wärmetransport ausgestaltetes Verbindungsstück zwischen Kühlblock und betaubarer Oberfläche. Es gibt verschiedene Varianten solcher Taupunkttemperatur-Messelemente. Am meisten bekannt ist ein Taupunktspiegel, bei dem die betaubare Oberfläche von einem auf Hochglanz polierten Spiegel gebildet wird und die Betauung optisch detektiert wird. Ein solcher Taupunktspiegel ist z.B. beschrieben in der Veröffentlichung FR-A-2 044 073. Wenn die Betauung ansetzt, wird die Temperatur der betaubaren Oberfläche gemessen und diese als Taupunkttemperatur detektiert. Die Kühlung erfolgt mittels einer an den Taupunktspiegel angrenzenden Kühlkammer, welche von einem Kühlmittel durchströmt wird. Bei modernen Taupunkttemperatursensoren wird im Kühlblock meistens ein Peltierelement verwendet.

Im Zusammenhang mit Taupunktspiegeln wurden Massnahmen vorgeschlagen, um den Zeitpunkt der Betauung visuell besser beurteilen zu können. Gemäss der Publikation US-A-2 281 418 wird hierzu der Spiegel nur im Zentrum mit einem Kühlelement in Verbindung gebracht, so dass über den Spiegel eine Temperaturdifferenz entsteht und damit der Kontrast zwischen der zuerst betauten Stelle im Zentrum und den anderen Stellen des Spiegels gut sichtbar wird. Als betaubare Oberfläche dient dabei also nur das Zentrum des Spiegels.

Neben Spiegeln und damit der optischen Erkennung der Betauung wird immer mehr die Betauung mit elektrischen Signalen als Aenderung der Leitfähigkeit, der Kapazität oder der Laufzeit akkustischer Wellen detektiert. Hierfür kann z.B. auf die FR-A 1 128 606 verwiesen werden. Wie darin ferner beschrieben wird, kann der Sensor nach jeder Messung mittels einem eingebauten Heizelement aufgeheizt werden, um das Kondensat von der betauten Oberfläche zu entfernen und einen nächsten Messvorgang einzuleiten. Entsprechende Messwertaufnehmer sind in den Publikationen DE-A-3446 277 und DE-A-1573 377 beschrieben.

Alle oben aufgeführten Taupunkttemperatursensoren haben eine Kühlquelle, von der durch Wärmeleitung die zu betaubare Oberfläche gekühlt wird. Dadurch entsteht ein unkontrollierter Temperaturgradient zwischen der Kühlquelle und der betaubaren Oberfläche oder auf der betaubaren Oberfläche selbst.

Je nach der mechanischen Anordnung des Temperatursensors entsteht durch den erwähnten unkontrollierten Temperaturgradient zwischen der betaubaren Oberfläche, dem Temperatursensor und der Kühlquelle ein kleinerer oder grösserer Messfehler der Taupunkttemperatur. Dieser Messfehler ist um so grösser, je schneller gekühlt wird. Durch schnelle Kühlung und grossen Wärmetransport von der betaubaren Oberfläche zur Kühlquelle wird die betaubare Oberfläche meistens unterkühlt und die Taupunkttemperatur damit falsch gemessen.

Die Aufgabe der Erfindung besteht darin, die oben beschriebenen Nachteile zu beseitigen und einen Taupunkttemperatursensor zu schaffen, der auch bei relativ rascher Abkühlung der betaubaren Oberfläche sehr genaue Messungen der Taupunkttemperatur erlaubt und zudem gegenüber Verschmutzungen unempfindlich ist.

Diese Aufgabe wird erfindungsgemäss durch einen im Patentanspruch 1 gekennzeichneten Taupunkttemperatursensor gelöst. Die vorgesehenen Massnahmen gestatten es, den Wärmefluss zwischen betaubarer Oberfläche und Kühlblock während der Betauung auf einem bestimmten, relativ geringen Wert zu halten. Insbesondere kann dieser Wärmefluss so gewählt werden, dass die durch das Verbindungsstück abfliessende Wärme bei der Betauung etwa der Wärme entspricht, die der betauten Oberfläche durch die Betauungswärme zugeführt wird. An dieser Oberfläche lässt sich damit während der Betauung ein Temperaturplateau etwa konstanter Temperatur feststellen, die zur Bestimmung der Taupunkttemperatur gemessen wird. Dessen ungeachtet kann die Abkühlung der betaubaren Oberfläche auf die Taupunkttemperatur relativ rasch erfolgen.

Nachfolgend werden Ausführungsbeispiele der Erfindung und der Messvorgang anhand der Zeichnungen näher erläutert. Es zeigen

Fig. 1 eine schematische Darstellung eines bekannten Taupunkttemperatursensors;

Fig. 2 eine schematische Darstellung eines ersten Ausführungsbeispieles des Taupunkttemperatur-Messelements gemäss der Erfindung im Längsschnitt;

Fig. 3 eine Frontansicht des Messelements gemäss Fig. 2;

Fig. 4 eine schematische Darstellung eines zweiten Ausführungsbeispieles des Taupunkttemperatursensors gemäss der Erfindung;

Fig. 5 ein Diagramm des Temperaturverlaufs an der zu betauenden Oberfläche in Abhängigkeit der Zeit, und

Fig. 6 ein entsprechendes Diagramm der gemessenen Leitfähigkeit eines Leitfähigkeitssensors an der zu betauenden Oberfläche.

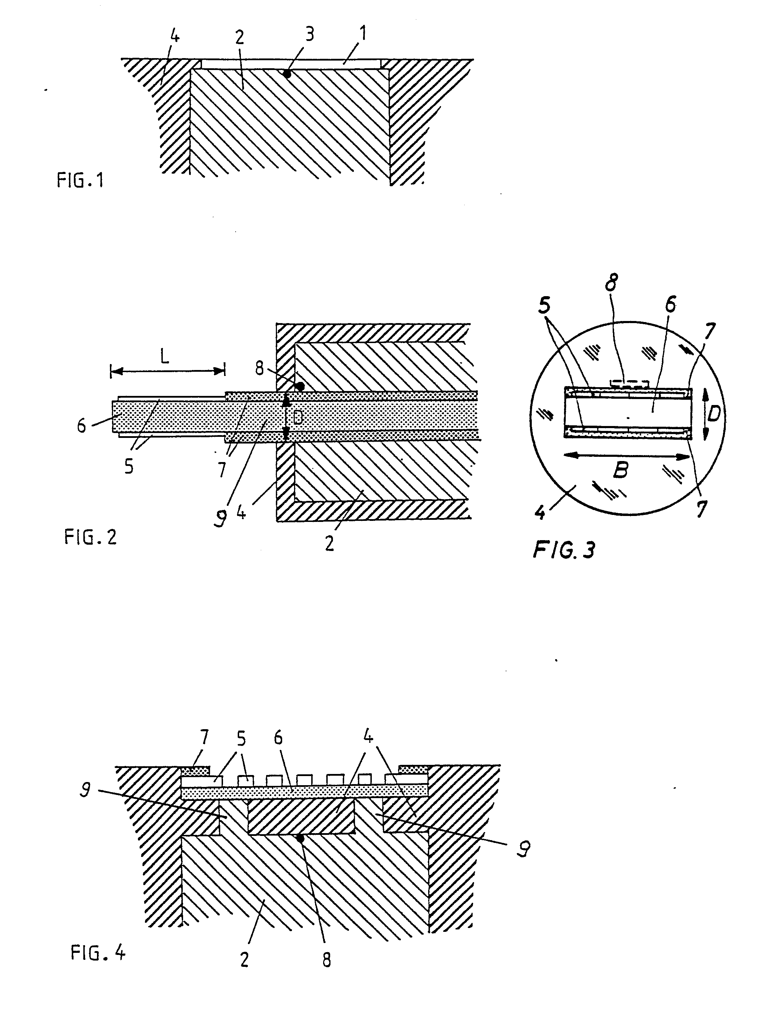

In Fig. 1 ist ein bekannter Taupunkttemperatursensor als Taupunktspiegel schematisch dargestellt. Die Spiegeloberfläche 1 dient als die betaubare Oberfläche und wird durch einen Kühlblock 2, der nicht detailliert dargestellt ist, gekühlt, um eine Betauung der Spiegeloberfläche 1 herbeizuführen. Die Temperatur der Spiegeloberfläche 1 wird durch einen Temperatursensor 3 gemessen. Damit die Betauung nur an der Spiegeloberfläche 1 und nicht am Kühlblock 2 stattfindet, ist der Kühlblock 2 mit einer Wärmeisolation 4 umhüllt. In den meisten Taupunktspiegeln besteht der Kühlblock 2 aus einem Peltierelement mit elektrischen Anschlüssen, mit einer kalten und einer warmen Seite und aus weiteren Kühlkörpern, um die Verlustleistung des Peltierelementes abführen zu können. Es werden oft auch mehrstufige Peltierelemente eingesetzt. Für die Erläuterung der Erfindung beschränkt man sich nur auf die Darstellung der letzten Kühlfläche unmittelbar vor der betaubaren Fläche, wobei hier die geometrische Anordnung von Bedeutung ist. Aus Fig. 1 ist ersichtlich, dass die Temperatur der betaubaren Oberfläche, in diesem Falle der Spiegeloberfläche 1, im wesentlichen durch die Temperatur des Kühlblocks 2 bestimmt wird, weil der Wärmetransport vom Kühlblock 2 zu der Spiegeloberfläche 1 sehr gut funktioniert. Dabei ist zu beachten, dass die Querschnittfläche des Wärmetransportes (vom Kühlblock 2 zu der Spiegeloberfläche 1) im Verhältnis zur Fläche der betaubaren Oberfläche (Spiegeloberfläche 1) gross ist. Die Benetzungswärme des betauenden Kondensates, das bereits bei sehr kleinen Mengen detektiert wird, hat also bei dieser geometrischen Anordnung fast keinen Einfluss auf die am Temperatursensor 3 gemessene Temperatur, sondern es ist im wesentlichen die Temperatur des Kühlblocks 2, die als Taupunkttemperatur gemessen wird. Deshalb wird die Abkühlgeschwindigkeit beim Durchfahren des Taupunktes in den meisten technischen Abhandlungen über Taupunktspiegel als wesentlich angesehen. Bei zu schnellem Durchfahren des Taupunktes werden die Fehler der Messung der Taupunkttemperatur sehr gross.

In Fig. 2 ist ein Längsschnitt durch einen Taupunkttemperatursensor als ein Ausführungsbeispiel der Erfindung schematisch dargestellt. Eine Frontansicht ergibt sich aus Fig. 3. Auf einem wärmeleitenden Träger 6 sind Elektroden 5 angebracht. Die Elektroden 5 sind so ausgebildet, dass sie je einen Temperatursensor, einen Leitfähigkeitssensor und eine Heizelektrode an der Trägeroberfläche bilden, wie in Fig. 3 durch entsprechende Unterteilung angedeutet.

Für Details der Elektrodenanordnung wird auf die veröffentlichte Europäische Patentanmeldung Nr. 0 193 015 des Anmelders verwiesen, woraus der Fachmann geeignete Elektrodenstrukturen entnehmen kann.

Die Elektroden 5 sind in ihrem hinteren Bereich durch eine elektrisch isolierende Schicht 7 abgedeckt, wobei diese Schicht 7 die über die Leitfähigkeitsmessung erfassbare, betaubare Oberfläche über eine Länge L begrenzt.

Der mit der Schicht 7 abgedeckte Träger 6 wird vom Kühlblock 2 festgehalten. Der Kälteblock 2 ist mit einer Wärmeisolation 4 umhüllt, damit auf dem Kühlblock 2 kein Kondensat entsteht. Aus den Fig. 2 und 3 ist ersichtlich, dass der Wärmetransport vom Kühlblock 2 zu der betaubaren Oberfläche über ein Verbindungsstück 9 der Dicke D beim rechteckigen Träger 6 erfolgt. Das Verhältnis der Querschnittfläche (D $\times$ B), die zum Wärmetransport dient, zur betaubaren Oberfläche (etwa 2 $\times$ B $\times$ L) lässt sich näherungsweise als $D/2L$ beim rechteckigen Träger 6 angeben.

Fasst man in Fig. 2 den Träger 6 als Stab mit rundem Querschnitt und Durchmesser D auf, so ergibt sich für dieses Verhältnis etwa $D/4L$.

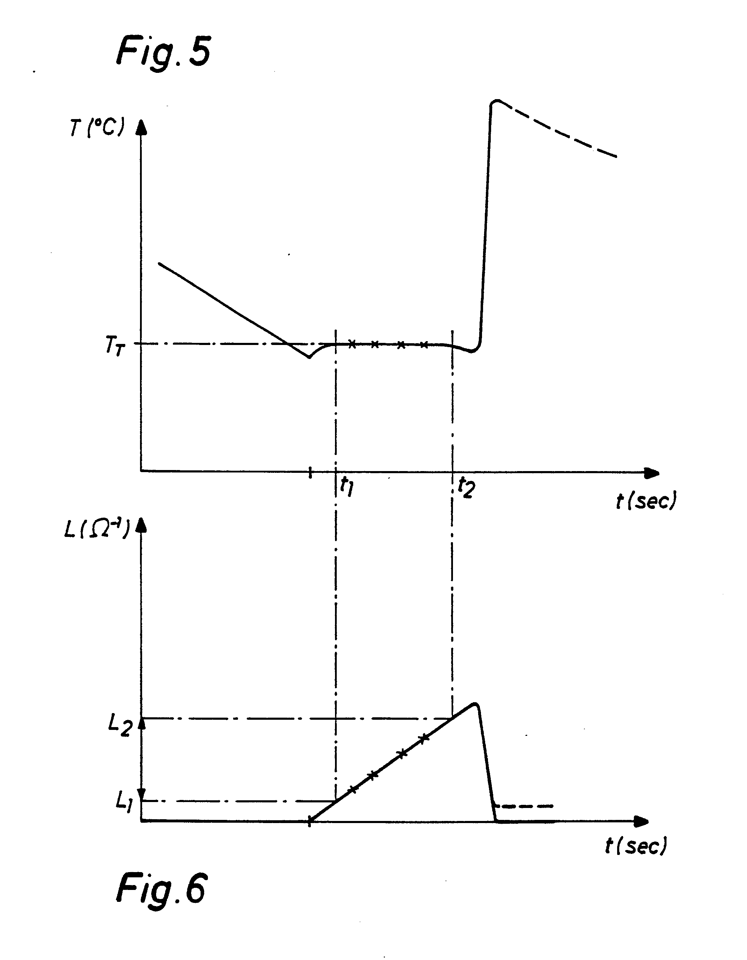

Es hat sich nun in praktischen Versuchen gezeigt, dass, wenn die betaubare Oberfläche wesentlich grösser als die Querschnittsfläche des Wärmetransport vom Kühlblock 2 ist, im Zeitpunkt der Betauung die Temperatur der Oberfläche im wesentlichen durch die Betauungswärme des Kondensats bestimmt wird. Durch diese geometrischen Verhältnisse lässt sich bei konstanter Abkühlung des Kühlblocks 2 ein Plateau bei der Taupunkttemperatur feststellen wie noch anhand der Fig. 5 und 6 erläutert wird, wobei die gemessene Leitfähigkeit an der betaubaren Oberfläche und damit die Menge des Kondensats ständig zunimmt. Dadurch ist eine sehr genaue und reproduzierbare Messung der Taupunkttemperatur möglich.

Beim Ausführungsbeispiel gemäss den Fig. 2 und 3 betragen die erwähnten Masse etwa: L = 6 mm, D = 0.8 mm, so dass das Verhältnis von Querschnittsfläche zu betaubarer Oberfläche zwischen 1 zu 7 und 1 zu 8 liegt.

Der Wärmetransport ist ausser von der Querschnittsfläche des Verbindungsstücks 9 auch vom Temperaturgradienten abhängig, der im Träger 6 bzw. im Verbindungsstück 9 vorhanden ist, wenn die betaubare Oberfläche zunächst aufgeheizt und danach mittels dem Kühlblock 2 abgekühlt wird.

Zur Kontrolle und zur Berücksichtigung des durch den Wärmetransport im Träger 6 entstandenen Temperaturgradienten ist deshalb ein zweiter Temperatursensor 8 am Rande des Kühlblocks 2 angeordnet. Aus den Temperaturwerten des ersten und des zweiten Temperatursensors lässt sich der Temperaturgradient und damit der Wärmefluss im Träger feststellen. Die Temperatur des Kühlblocks kann dann so gewählt werden, dass während der Betauung sich das erwähnte Gleichgewicht von zu- und weggeführter Wärme an der betaubaren Oberfläche ergibt.

Durch Aufheizen der betaubaren Oberfläche ist es möglich, das Kondensat sehr schnell zu verdampfen und nach Ausschalten der Heizung die betaubare Oberfläche sehr schnell abkühlen zu lassen, wenn der Kühlblock 2 unter der Taupunkttemperatur gehalten wird und wesentlich grössere Masse als der aus dem Kühlblock 2 herausragende Träger 6 aufweist. In der Praxis hat sich gezeigt, dass dieser Prozess innerhalb einiger Sekunden wiederholt werden kann, was bei den handelsüblichen Taupunktspiegeln einige Minuten erfordert.

In den Figuren 5 und 6 ist dieser Vorgang - schematisch dargestellt. Fig. 5 zeigt ein Diagramm der gemessenen Temperatur T an der betaubaren Oberfläche im zeitlichen Verlauf, während Fig. 6 die gemessene Leitfähigkeit L des Leitfähigkeitssensors zeigt, welche ein Mass für die Menge des Kondensats auf der betaubaren Oberfläche ist.

Zunächst nimmt die Temperatur der zuvor aufgeheizten betaubaren Oberfläche bis etwa zum Taupunkt $T_T$ ab. Mit dem Einsetzen der Betauung entsteht ein Temperaturplateau, wie bereits erläutert. Ist ein bestimmtes Minimum der Betauung erreicht, was durch eine Leitfähigkeitsschwelle $L_1$ feststellbar ist, werden die Temperaturmesswerte aufgenommen bis zu einer höheren Leitfähigkeitsschwelle $L_2$. Danach wird die betaubare Oberfläche aufgeheizt, so dass das Kondensat verdampft und ein neuer Messzyklus beginnen kann.

Ein weiterer Vorteil der geometrischen Anordnung in Fig. 2 ist, dass bei der Feststellung einer Verschmutzung an der betaubaren Oberfläche, die trotz der Aufheizung wesentlich über die Taupunkt- oder die Umgebungstemperatur durch die Messung der Leitfähigkeit oder durch andere oben beschriebene Messungen feststellbar ist, es möglich ist, die betaubare Oberfläche auf mehr als 500 oder 600°C aufzuheizen, um die Verschmutzung zu verbrennen. Mit Vorteil kann für diese Zwecke ein in der Europäischen Patentanmeldung Nr. 0 193 015 offenbarter Leitfähigkeitssensor verwendet werden. Wie in Fig. 6 strichliert dargestellt ist, lässt sich die Situation der Verschmutzung dadurch feststellen, dass die Leitfähigkeit des Leitfähigkeitssensors nach normaler Aufheizung nicht mehr auf im wesentlichen Null zurückgeht.

Es versteht sich, dass auch ein optisches Verfahren zur Erkennung der Kondensatbildung an der betaubaren Oberfläche verwendet werden kann. Auch die Messung einer Kapazitäts-oder Impedanzänderung, der Laufzeit akustische Wellen oder eine Resonanzverschiebung eines mechanischen oder elektrischen Schwingers (Piezokristall oder Quarz) ist zur Erkennung der Kondensatbildung verwendbar.

In Fig. 4 ist eine zweite Ausführungsform eines Taupunkttemperatursensors gemäss der Erfindung schematisch dargestellt. Der Kühlblock 2 grenzt an einen Träger 6 mit Elektroden 5, welche einen Temperatursensor, eine Heizelektrode und Elektroden zur Messung der Leitfähigkeit bilden. Die Elektroden 5 sind durch eine Schicht 7 abgedeckt, um die betaubare Oberfläche zu begrenzen. Der Kühlblock 2 ist mit einer Wärmeisolation 4 umhüllt. Im Kühlblock 2 ist ein zweiter Temperatursensor 8 zur Messung seiner Temperatur vorgesehen. In diesem Beispiel ist ein Querschnitt durch den Taupunkttemperatursensor dargestellt, ohne detaillierte Ausführung der Elektrodenanschlüsse und des Kühlblocks 2, wobei der Kühlblock 2 oder der Träger 6 rechteckig oder rund sein können. Aus der Fig. 4 ist es ersichtlich, dass die Querschnittfläche der Verbindungsstücke 9 für den Wärmetransport vom Kühlblock 2 zu der betaubaren Oberfläche, an der sich die Elektroden 5 befinden, wesentlich kleiner ist als die betaubare Oberfläche.

Die Funktion des Taupunkttemperatursensors in Fig. 4 ist im wesentlichen die gleiche, wie sie bereits in der Beschreibung der Ausführungsform in Fig. 2 festgehalten ist. Ebenfalls sind hier alle Möglichkeiten der Erkennung der Kondensatbildung wie bei der Ausführungsform in Fig. 2 vorhanden.

**Ansprüche**

1. Taupunkttemperatur-Messelement mit einem Sensor zur Temperaturmessung einer betaubaren Oberfläche (5), einem zur Kühlung der betaubaren Oberfläche vorgesehenen Kühlblock (2) und mindestens einem für den Wärmetransport ausgestaltetes Verbindungsstück (9) zwischen Kühlblock und betaubarer Oberfläche, dadurch gekennzeichnet, dass die zum Wärmetransport zwischen Kühlblock (2) und betaubarer Oberfläche (5) vorgesehene Querschnittsfläche des Verbindungsstücks (9) mindestens dreimal kleiner ist als die betaubare Oberfläche und dass am Kühlblock (2) ein zweiter Sensor (8) zur Temperaturmessung des Kühlblocks vorgesehen ist, womit der Temperaturgradient zwischen betaubarer Oberfläche und Kühlblock kontrollierbar ist.

2. Taupunkttemperatur-Messelement, dadurch gekennzeichnet, dass der zweite Sensor (8) am kühlblockseitigen Ende des für den Wärmetransport ausgestalteten Verbindungsstücks (9) angeordnet ist.

3. Taupunkttemperatur-Messelement nach Anspruch 1 oder 2, gekennzeichnet durch Elektroden zur Messung der Leitfähigkeit an der betaubaren Oberfläche.

4. Taupunkttemperatur-Messelement nach Anspruch 1, 2 oder 3, gekennzeichnet durch mindestens eine Heizelektrode an der betaubaren Oberfläche.

5. Taupunkttemperatur-Messelement nach Anspruch 3 oder 4, gekennzeichnet durch eine die betaubare Oberfläche begrenzende und die Elektroden elektrisch isolierende Isolationsschicht (7).

6. Verfahren zur Taupunkttemperaturmessung mit einem Messelement nach einem der vorangehenden Ansprüche, dadurch gekennzeichnet, dass der Temperaturgradient zwischen betaubarer Oberfläche und Kühlblock so eingestellt wird, dass der Wärmefluss durch das Verbindungsstück bei Taupunkttemperatur einen Wert annimmt, welcher etwa der Benetzungswärme des sich an der zu betauenden Oberfläche bildenden Kondensats entspricht.

7. Verfahren nach Anspruch 6, wobei bei der Betauung die Temperatur der betaubaren Oberfläche mindestens für eine bestimmte Zeitdauer etwa konstant bleibt, dadurch gekennzeichnet, dass diese etwa konstante Temperatur zur Bestimmung der Taupunkttemperatur gemessen wird.

8. Verfahren nach Anspruch 7, dadurch gekennzeichnet, dass mittels der Elektroden zur Messung der Leitfähigkeit ein unterer Leitfähigkeitsschwellwert ($L_1$) bestimmt wird, der einer minimalen Betauung entspricht, ab welcher die Temperaturmessung für die Bestimmung der Taupunkttemperatur gemessen wird.

9. Verfahren nach Anspruch 8, dadurch gekennzeichnet, dass mittels der Elektroden zur Messung der Leitfähigkeit ein oberer Leitfähigkeitsschwellwert ($L_2$) bestimmt wird, der einer maximalen Betauung entspricht, bis zu welcher die Temperaturmessung für die Bestimmung der Taupunkttemperatur gemessen wird.

FIG.1

FIG.2

FIG.3

FIG.4

## Fig.5

## Fig.6